(19) Europäisches Patentamt
European Patent Office
Office européen des brevets

(11) Numéro de publication: **0 227 492**
**A1**

(12) **DEMANDE DE BREVET EUROPEEN**

(21) Numéro de dépôt: **86402119.1**

(22) Date de dépôt: **29.09.86**

(51) Int. Cl.[4]: **C 09 K 19/54**
C 09 K 19/30, C 09 K 19/42

(30) Priorité: **02.10.85 FR 8514622**

(43) Date de publication de la demande:
**01.07.87 Bulletin 87/27**

(84) Etats contractants désignés: **CH DE FR GB LI**

(71) Demandeur: **COMMISSARIAT A L'ENERGIE ATOMIQUE**
**Etablissement de Caractère Scientifique Technique et Industriel**
**31/33, rue de la Fédération**
**F-75015 Paris (FR)**

(72) Inventeur: **Vinet, Françoise**
**52, rue Thiers**
**F-38000 Grenoble (FR)**

**Vauchier, Claude**
**1 Bis, rue Charreton**
**F-38000 Grenoble (FR)**

(74) Mandataire: **Mongrédien, André et al**
**c/o BREVATOME 25, rue de Ponthieu**
**F-75008 Paris (FR)**

(54) **Mélange comportant un cristal liquide nématique et un composé non mésomorphe et son utilisation dans un dispositif d'affichage à cristaux liquides.**

(57) L'invention a pour objet un mélange comportant un cristal liquide nématique et un composé non mésomorphe.

Ce composé non mésomorphe permet d'améliorer le comportement élastique du cristal liquide nématique en augmentant la valeur du rapport $K_{33}/K_{11}$ dans lequel $K_{33}$ représente la constante élastique de flexion et $K_{11}$ représente la constante élastique d'éventail du cristal liquide.

Le composé non mésomorphe peut répondre à la formule :

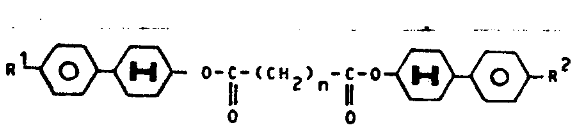 (I)

dans laquelle $R^1$ et $R^2$ qui peuvent être identiques ou différents, représentent un atome d'hydrogène ou un radical alkyle ayant de 1 à 12 atomes de carbone et n est un nombre entier allant de 2 à 16, et être associé à des cristaux liquides ou des mélanges de cristaux liquides contenant un 1-(alkylcyclohexyl-2-(alkylfluorobiphényl) éthane.

Ces mélanges peuvent être utilisés comme cristal liquide 8 dans un dispositif d'affichage.

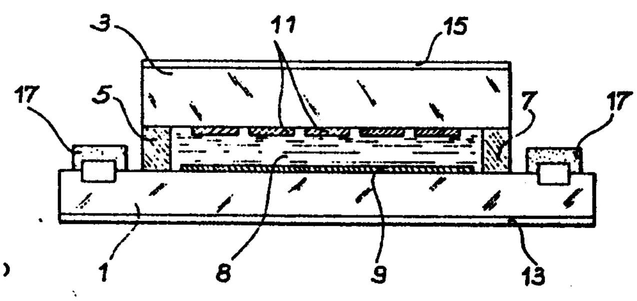


EP 0 227 492 A1

**Description**

Mélanges comportant un cristal liquide nématique et un composé non mésomorphe.

La présente invention a pour objet un mélange comportant un cristal liquide nématique et un composé non mésomorphe.

De façon plus précise, elle concerne un mélange comportant un cristal liquide nématique, utilisable dans des dispositifs mettant en jeu l'effet de biréfringence contrôlé électriquement.

Dans certains dispositifs à cristaux liquides, l'effet électro-optique utilisé est la biréfringence contrôlée électriquement (BCE). Cet effet correspond à une déformation sous champ électrique d'une phase nématique à anisotropie diélectrique $\Delta\varepsilon$ négative, $\Delta\varepsilon$ représentant la différence entre la constante diélectrique $\varepsilon_a$parallèle au grand axe moléculaire du cristal et la constante diélectrique $\varepsilon_b$ perpendiculaire à ce grand axe.

Dans les dispositifs à cristaux liquides, il est nécessaire d'utiliser des matériaux nématiques permettant un taux élevé de multiplexage, c'est-à-dire un nombre important de lignes de l'écran adressables électriquement afin de visualiser un haut taux d'informations. Ce taux de multiplexage k peut s'exprimer en fonction de la tension appliquée aux bornes du dispositif (V) et de la tension de seuil de déformation du cristal ($V_S$) par la formule :

$$k < \left(\frac{V^2 + V_S^2}{V^2 - V_S^2}\right)^2$$

Pour un taux de multiplexage donné, il est nécessaire d'avoir un angle de basculement moléculaire ($\varphi_M$) au centre de la cellule à cristaux liquides le plus grand possible pour obtenir le meilleur contraste entre les deux états noir et blanc du cristal sous l'action du champ électrique. Pour de faibles angles de basculement $\varphi_M$ est directement liée à la tension de seuil de déformation du cristal $V_S$ et au rapport des constantes élastiques de flexion $K_{33}$ éventail $K_{11}$ du cristal liquide. En effet, $\varphi_M$ est donné par la formule :

$$\Phi_M = \frac{V^2 - V_S^2}{V^2 (\frac{2}{3} + \left|\frac{\Delta\epsilon}{\epsilon_a}\right| - \eta_{31} V_S^2}$$

$$\text{avec } V_S = 2\pi\sqrt{\frac{\pi K_{33}}{\Delta\epsilon}}$$

$$\Delta\epsilon = \epsilon a - \epsilon b \qquad \eta_{31} = \frac{1-K_{33}}{K_{11}}$$

Dans ces conditions, la biréfringence induite électriquement est aors de la forme :

$$\Delta n = \left(\frac{\sin^2\Phi}{n_o^2} + \frac{\cos^2\Phi}{n_e^2}\right)^{1/2} - n_0$$

$$\text{avec } \Phi \simeq \Phi_M \cos\frac{\pi}{e} z$$

dans laquelle $n_e$ et $n_o$ sont les indices extraordinaire et ordinaire du cristal, e l'épaisseur du cristal liquide et Z sa position dans la cellule.

L'intensité relative transmise par le dispositif à cristal liquide entre deux polariseurs croisés est donnée par la relation :

$$\frac{I}{I_0} = \sin^2 \pi \frac{\Delta n\, e}{\lambda}$$

dans laquelle $\Delta n$ est égal à $n_e$-$n_o$, et $\lambda$ est la longueur d'onde du faisceau lumineux éclairant le dispositif. Il en résulte que les paramètres les plus importants du matériau sont

$$\frac{K_{33}}{K_{11}},$$

$\Delta n$, $\Delta\varepsilon$ ainsi que la gamme de mésomorphisme $\Delta T$ du cristal.

Parmi ces paramètres, le rapport $K_{33}/K_{11}$ joue un rôle important, car il détermine la raideur de la pente de la courbe de transfert électro-optique et donc la multiplexabilité du matériau utilisé ; aussi, ce rapport doit être le plus grand possible.

Selon les composés nématiques utilisés, ce rapport peut varier de 0,5 à 3, la valeur la plus courante étant située autour de 1. Pour avoir une valeur plus élevée du rapport $K_{33}/K_{11}$, on peut envisager d'augmenter la valeur de $K_{33}$ ou de diminuer la valeur de $K_{11}$.

Une valeur élevée de $K_{33}$ n'est pas intéressante dans les dispositifs d'affichage, car elle implique l'utilisation de tensions de commande élevées. En effet, la tension de seuil de déformation du cristal $V_s$ est proportionnelle à la valeur de la constante élastique de déformation en flexion $K_{33}$ suivant la formule :

$$V_s = 2\pi \sqrt{\frac{\pi K_{33}}{|\Delta\varepsilon|}}$$

Il est donc préférable de diminuer la valeur de $K_{11}$, ce qui correspond à diminuer les interactions intermoléculaires entre les molécules du cristal liquide. Généralement, les molécules de cristal liquide nématique sont formées d'une partie centrale rigide comportant des groupements phényle et d'une ou deux parties flexibles situées aux extrémités de la partie rigide.

Plusieurs solutions peuvent être envisagées pour diminuer les interactions entre des molécules de ce type. L'une de ces solutions est de remplacer un cycle phényle de la partie rigide par un cyclohexane ou par un noyau bicyclo-octane. En effet, ce dernier noyau par sa forme pratiquement globulaire et par ses liaisons complètement saturées ne favorise pas les interactions intermoléculaires et ceci permet de minimiser le rapport $K_{11}$ et d'augmenter le rapport $K_{33}/K_{11}$. Une seconde solution est de substituer un ou plusieurs atomes d'hydrogène du noyau phényle par un élément électro-négatif tel que le fluor.

Cependant, de telles modifications ont l'inconvénient de conduire à des molécules qui ne présentent pas toutes les propriétés électro-optiques requises pour les dispositifs d'affichage ; de ce fait, on doit les utiliser en mélange avec d'autres cristaux liquides, ceci a pour conséquence de diminuer de façon importante la valeur du rapport $K_{33}/K_{11}$.

La présente invention a précisément pour objet un mélange comportant un cristal liquide nématique qui pallie l'inconvénient précité, car il présente simultanément un bon comportement élastique et de bonnes propriétés électro-optiques pour l'affichage.

Le mélange, selon l'invention, comprend au moins un cristal liquide nématique et au moins un composé non mésomorphe capable d'améliorer le comportement élastique du cristal liquide nématique en augmentant la valeur du rapport $K_{33}/K_{11}$ dans lequel $K_{33}$ représente la constante élastique de flexion et $K_{11}$ représente la constante élastique d'éventail du cristal liquide.

Ainsi, on peut obtenir un mélange comportant un cristal liquide qui présente simultanément de bonnes propriétés électro-optiques et un bon comportement élastique. En effet, il suffit de choisir un cristal liquide ayant les paramètres électro-optiques requis pour l'utilisation dans un dispositif d'affichage et de l'associer à un composé non mésomorphe modifiant uniquement le comportement élastique du cristal liquide.

Généralement, le mélange comprend au plus 10 %, et de préférence 0,5 à 10 % en poids du composé non mésomorphe. En effet, la quantité de ce composé doit être faible pour, d'une part, ne pas détruire l'ordre nématique du cristal liquide et, d'autre part, ne pas modifier de façon importante les propriétés électro-optiques de ce cristal liquide.

De préférence, les composés non mésomorphes utilisés répondent à la formule :

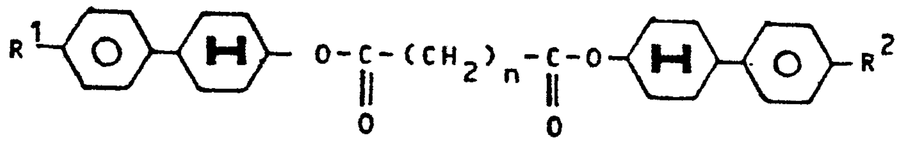 (I)

dans laquelle $R^1$ et $R^2$ qui peuvent être identiques ou différents, représentent un atome d'hydrogène ou un radical alkyle ayant de 1 à 12 atomes de carbone et n est un nombre entier allant de 2 à 16.

A titre d'exemples de tels composés, on peut citer :

- les composés répondant à la formule (I) dans laquelle n = 10 ou 14 et $R_1$ et $R_2$ qui sont identiques, représentent un atome d'hydrogène ou un radical choisi parmi les radicaux pentyle, hexyle, heptyle et nonyle.

De préférence, on utilise le composé de formule :

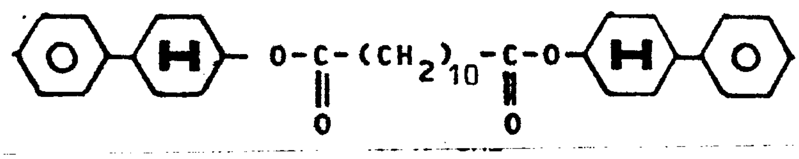 (II)

Les composés non mésomorphes utilisés dans l'invention peuvent être préparés par des procédés de synthèse classiques en partant des phénylcyclohexanols correspondants de formule :

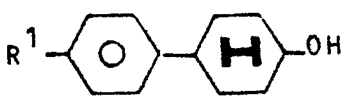 et/ou 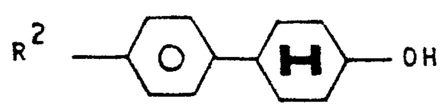

dans lesquelles $R^1$ et $R^2$ ont la signification donnée ci-dessus,en faisant réagir ces phénylcyclohexanols avec le diacide correspondant de formule :

$HOOC - (CH_2)_n - COOH$.

Lorsque $R^1$ et/ou $R^2$ représentent un atome d'hydrogène, on part de la phénylcyclohexanone que l'on réduit en phénylcyclohexanol par action d'hydrure de lithium et d'aluminium $LiAlH_4$ en présence d'éther.

Lorsque $R^1$ et/ou $R^2$ sont des radicaux alkyle de formule $C_mH_{2m+1}$ avec m étant un nombre entier de 2 à 11, on prépare les phénylcyclohexanols substitués correspondants en partant du phénylcyclohexanol que l'on traite par l'anhydride acétique pour obtenir l'ester acétique de phénylcyclohexanol de formule :

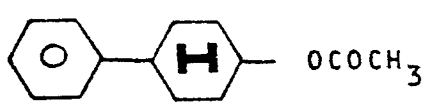

puis l'on traite cet ester acétique du phénylcyclohexanol par le chlorure d'acide de formules $R'^1COCl$ et/ou $R'^2COCl$ dans lesquelles $R'^1$ et $R'^2$ sont des radicaux de formule $C_{m-1}H_{2m}$ avec m ayant la signification donnée ci-dessus, pour obtenir le composé de formule suivante :

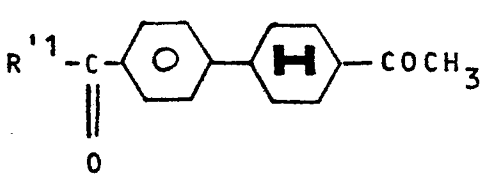 ou 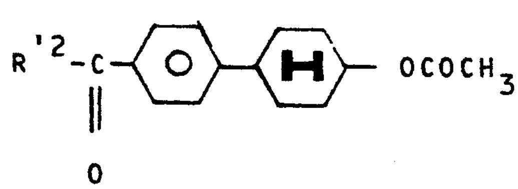

en realisant cette réaction dans le dichlorométhane en présence de chlorure d'aluminium.

Le composé ainsi obtenu est ensuite traité par la soude pour le transformer en alkylcarbonyl phénylcyclohexanol de formule :

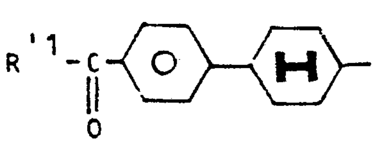 ou 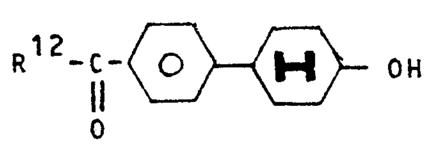

que l'on réduit ensuite par l'hydrazine en présence de diéthylène glycol et de potasse pour obtenir les

phénylcyclohexanols correspondants de formule :

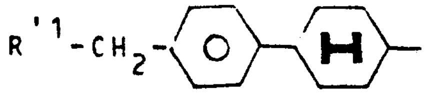 ou 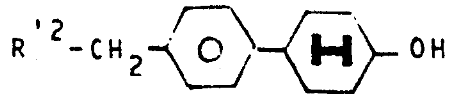

On fait réagir ensuite ces phénylcyclohexanols avec le diacide correspondant par condensation à la température ambiante en utilisant la méthode de Hassner dans laquelle 1 mole du diacide, du N. N-dicyclohexylcarbodiimide et de la 4-pyrrolidino pyridine dans du dichlorométhane est ajoutée à 2 moles du ou des phénylcyclohexanols appropriés.

Lorsque l'on utilise deux phénylcyclohexanols de formule :

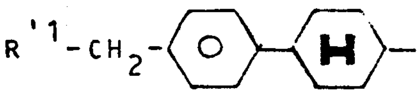 et 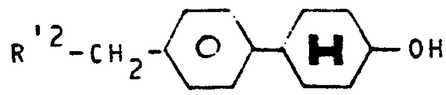

il est nécessaire de séparer ensuite les différents composés présents dans le mélange réactionnel afin d'isoler le composé de formule (I) :

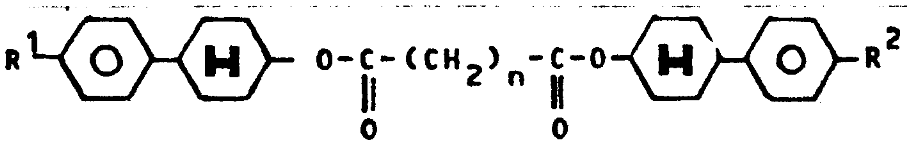 (I)

et ceci peut être effectué par des méthodes classiques.

Aussi, on utilise de préférence un seul cyclohexanol, et le composé obtenu est un composé de formule (I) dans laquelle $R^1$ et $R^2$ sont identiques.

Les composés non mésomorphes répondant à la formule (I) précitée peuvent être associés à un cristal liquide ayant de préférence une structure voisine, par exemple à un cristal liquide constitué par un 1-alkyl-cyclohexyl-2-( lkylfluorobiphényl) éthane ce formule :

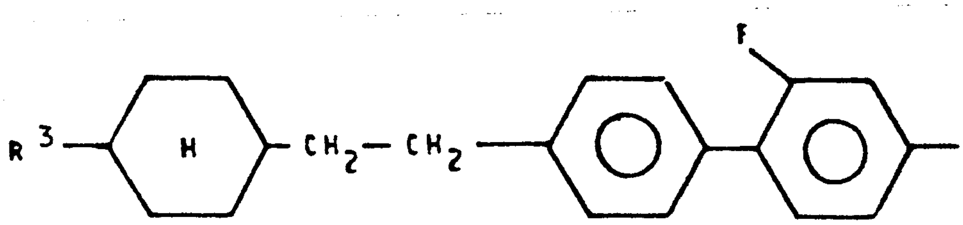 (III)

dans laquelle $R^3$ et $R^4$ qui peuvent être identiques ou différents, sont des radicaux alkyle de 1 à 7 atomes de carbone.

On peut aussi associer ces composés non mésomorphes avec des mélanges de cristaux liquides nématiques constitués par :

- au moins un 1-(alkylcyclohexyl-2-(alkylfluorobiphényl) éthane de formule :

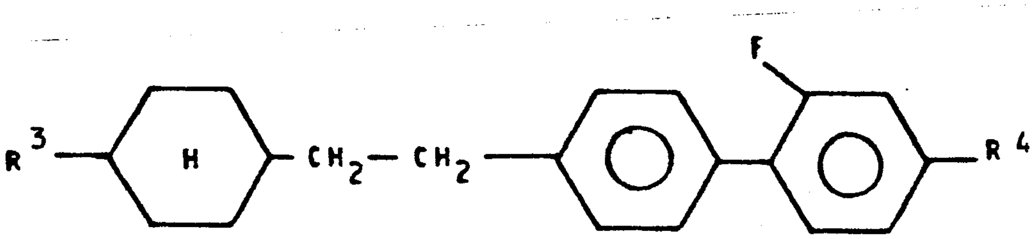 (III)

dans laquelle $R^3$ et $R^4$ qui peuvent être identiques ou différents, sont des radicaux alkyle de 1 à 7 atomes de carbone,

- au moins un composé choisi parmi :

a) les alkyl bicyclooctane carboxylates d'alkyl fluorophényle de formule :

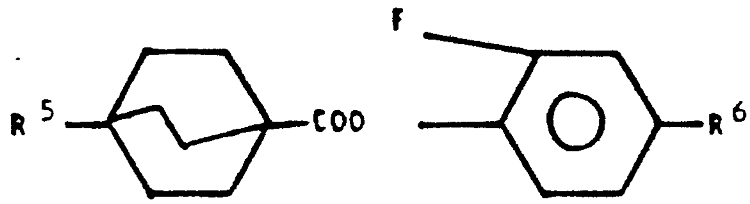

(IV)

dans laquelle $R^5$ et $R^6$ qui peuvent être identiques ou différents, sont des radicaux alkyle de 1 à 7 atomes de carbone,

b) les biphénylbicyclohexyldialkyle de formule :

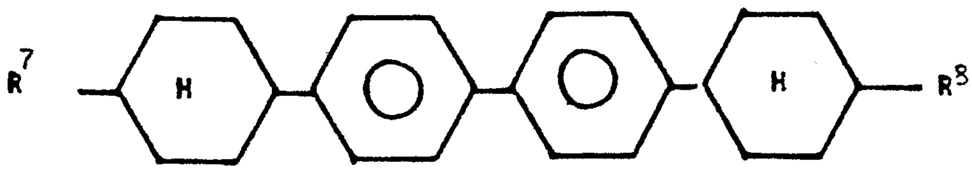

(V)

dans laquelle $R^7$ et $R^8$ sont des radicaux alkyle de 1 à 7 atomes de carbone,

c) les alkylcyclohexylcarboxylates de dicyanoalcoxyphényle répondant à la formule :

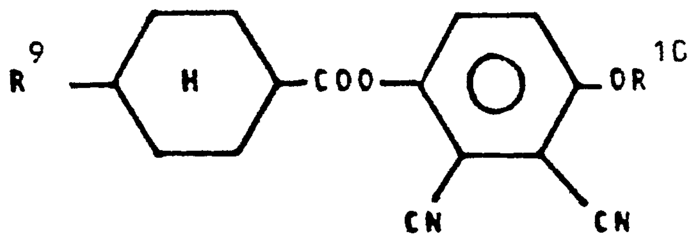

(VI)

dans laquelle $R^9$ et $R^{10}$ qui peuvent être identiques ou différents, sont des radicaux alkyle de 1 à 7 atomes de carbone, et

d) les bicyclohexylcarbonitriledialkyle ou alkylalkylène répondant à la formule :

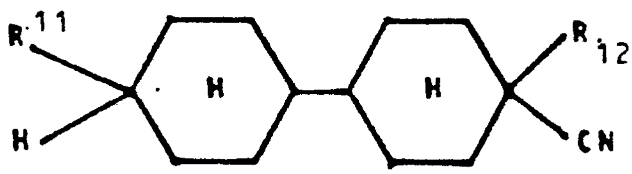

(VII)

dans laquelle $R^{11}$ et $R^{12}$ qui peuvent être identiques ou différents, sont des radicaux alkyle ou alkylène de 1 à 7 atomes de carbone ;

ledit mélange comprenant :

- de 60 à 90 % en poids au total du ou des 1-(alkylcyclo;hexyl)-2-(alkylfluorobiphénylyl) éthane,
- de 0 à 15 % au total du ou des alkylbicyclooctane carboxylates d'alkylfluorophényle,
- de 0 à 12 % au total du ou des biphénylbicyclohexyldialkyle,
- de 0 à 12 % au total du ou des alkylcyclohexylcarboxylates de dicyanoalcoxyphényle, et
- de 0 à 40 % au total du ou des bicyclohexylcarbonitrile dialkyle ou alkylalkylène.

Ces cristaux liquides sont des produits connus, ils peuvent être préparés par des procédés classiques.

Ainsi, les 1-(alkylcyclohexyl)-2-(alkylfluorobiphénylyl) éthanes peuvent être préparés en utilisant la méthode décrite dans le brevet anglais GB-A-2 133 795.

A titre d'exemple de composés de ce type susceptibles d'être utilisés dans l'invention, on peut citer le 1-(trans-4-n-éthylcyclohexyl)-2-[2'-fluoro-4'-(2-éthyl)-4-biphénylyl] éthane (I22) de formule :

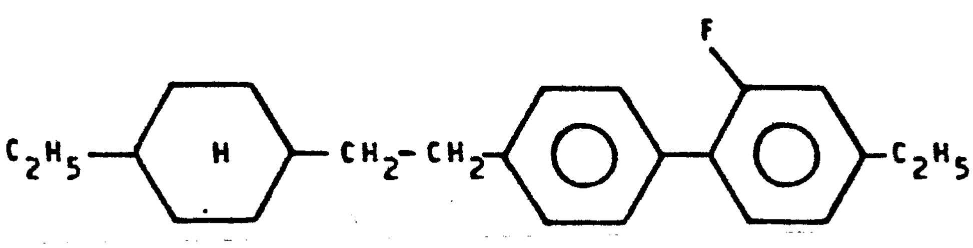

(VI)

Le 1-(trans-4-n-propylcyclohexyl)-2-[2'fluoro-4'-(2-pentyl)-4-biphénylyl]éthane (I35) de formule :

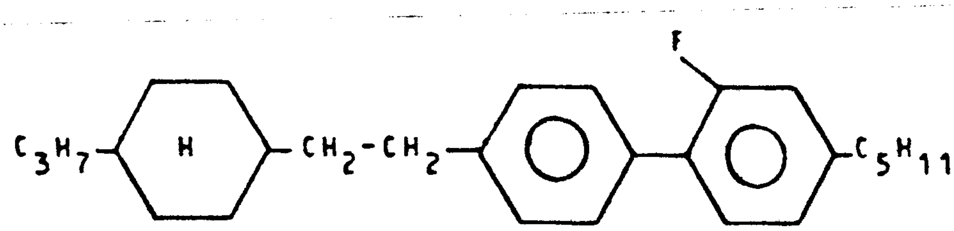

(IX)

Le 1-(trans-4-n-propylcyclohexyl)-2-[2'-fluoro-4'-(2-éthyl)-4-biphénylyl]éthane (I32) de formule :

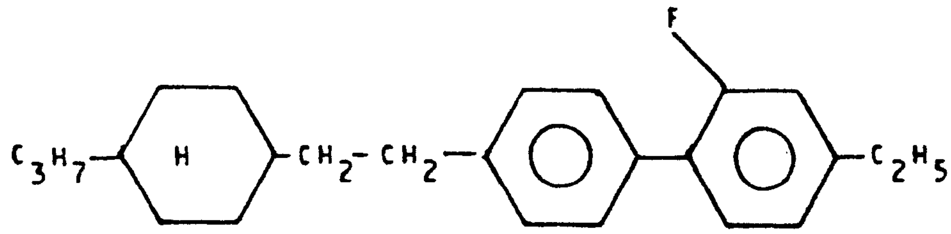

(X)

Le 1-(trans-4-n-pentylcyclohexyl)-2-[2'-fluoro-4'-(2-éthyl)-4-biphénylyl]éthane (I52) de formule :

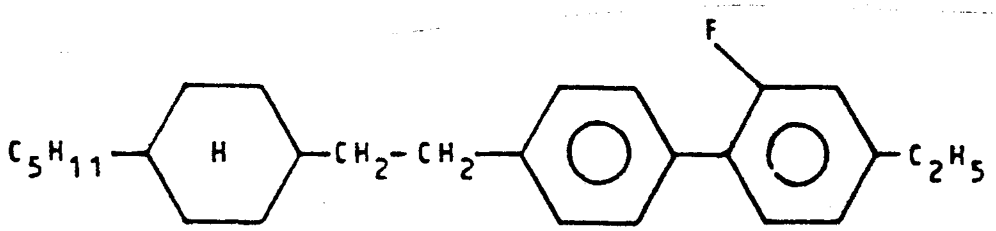

(XI)

Les alkylbicyclooctane carboxylates d'alkylfluorophényle peuvent être préparés par la méthode décrite par G.W. Gray et S.M Kelly dans Mol Cryst. Liq. Cryst. (1981), vol. 75, p. 109-119.

A titre d'exemples de composés de ce type susceptibles d'être utilisés, on peut citer le 4-n-pentyl-bicyclooctane carboxylate de 2-fluoro-4-n-pentylphényle (BC055F) de formule :

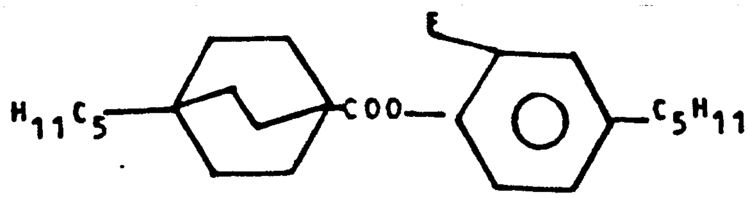

(XII)

et le 4-n-pentyl-bicyclooctane carboxylate de 2-fluoro-4-n-heptylphényle (BC057F) de formule :

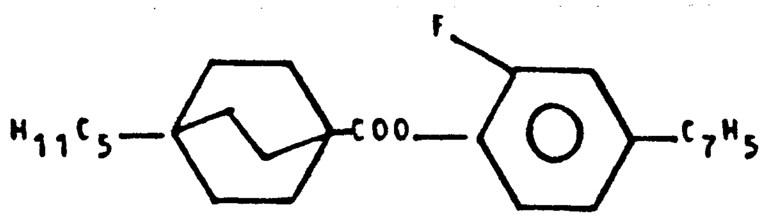

(XIII)

Les biphényl bicyclohexyldialkyle peuvent être préparés par la méthode décrite par R. Eidenschink D. Erdmann, J. Krause et L.Pohl dans Angew chem. 89-103 (1977).

A titre d'exemple de tels composés, on peut citer le 4-(trans-4-n-pentylcyclohexyl)-4'-( trans-4-n-propylcyclohexyl) biphényle (CBC53) de formule :

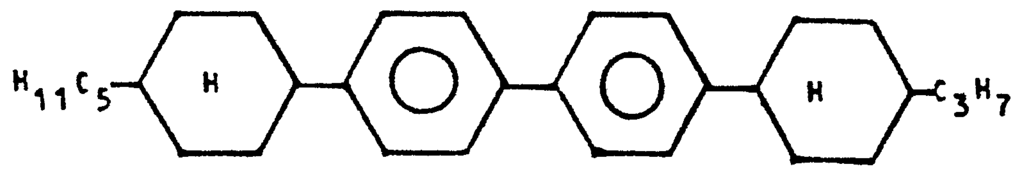

(XIV)

Les alkylcyclohexylcarboxylates de dicyanoalkoxyphényle peuvent être préparés par les techniques décrites par K. Wallenfels, G. Bachmann, D.Hofmann et R. Kern dans Tetrahedron, (1965), vol.21, p 2239 à 2256. Le composé II (page 2241) de cet article

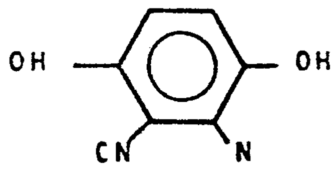

est traité par un chlorure d'acide d'un alkyl cyclohexyl

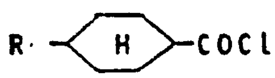

qui donne

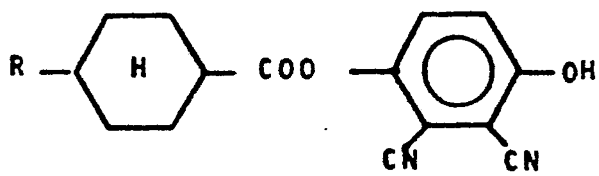

ce dernier composé est ensuite traité par un bromure d'alkyle qui conduit au dérivé

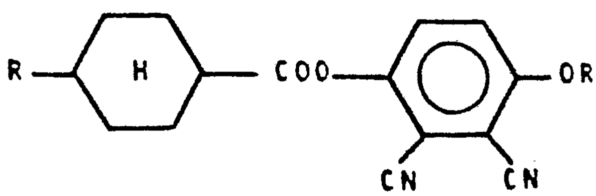

A titre d'exemple d'un tel composé, on peut citer le trans-4-n-pentylcyclohexyl-1-carboxylate de 4-n-butoxy-2,3-dicyanophényle (5HENO4) de formule :

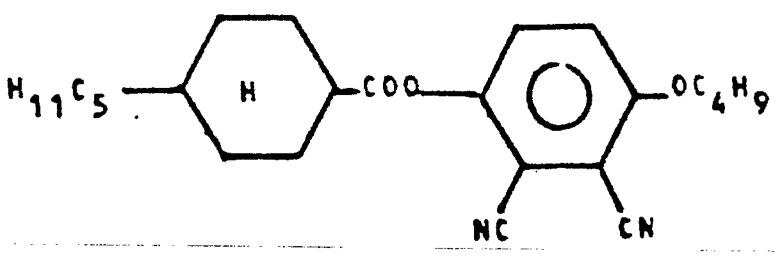

(XV)

Les bicyclohexylcarbonitriledialkyle ou alkylalkylène peuvent être préparés par la méthode décrite par R.Eidenschink, G.Haas, M.Rômer et B.S. Scheuble dans Angew Chem. 96 (1984) n°2 p.151.

A titre d'exemples de tels composés, on peut citer le 4 α n-heptyl, 4'α n-butyl-1 α, 1' α bicyclohexyl-4 β-carbonitrile (CCN47) de formule :

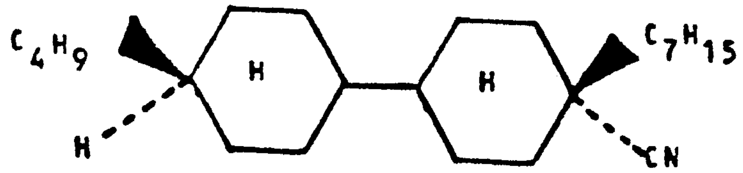

(XVI)

le 4α, 4'α di-n-pentyl-1 α, 1'α bicyclohexyl-4 β-carbonitrile (CCN55) de formule :

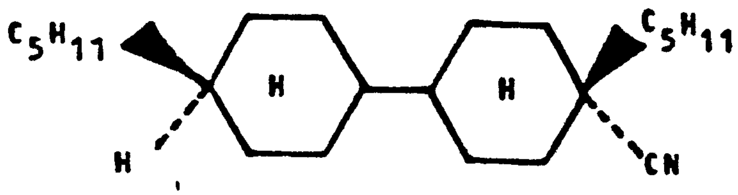

(XVII)

et le 4α n-pentyl, 4'α(propényl 2)-1α, 1'α bicyclohexyl-4β carbonitrile (5CCOd3) de formule :

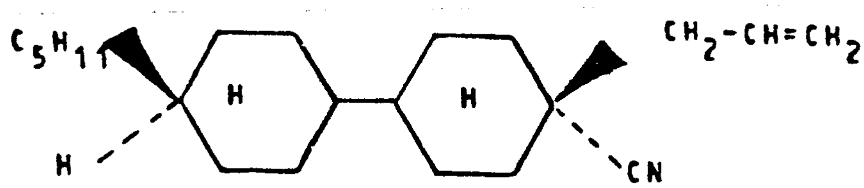

(XVIII)

Généralement, les mélanges de l'invention, comprennent plusieurs constituants, en particulier plusieurs 1-(alkyl-cyclohexyl)-2-(alkylfluorobiphénylyl) éthane et plusieurs constituants choisis parmi les composés a), b), c) et d).

Par ailleurs, lorsque le melange renferme plusieurs constituants du même type, ceux-ci peuvent être présents sous la forme de mélanges eutectiques.

Les mélanges de l'invention qui comportent au moins un cristal liquide nématique et au moins un composé non mésomorphe capable d'améliorer le comportement élastique du cristal liquide nématique en augmentant la valeur du rapport $K_{33}/K_{11}$ peuvent être utlisés dans des dispositifs d'affichage utilisant l'effet de biréfringence contrôlé électriquement. Dans ce cas, on réalise les écrans de tels dispositifs en utilisant le mélange de l'invention.

D'autres caractéristiques et avantages de l'invention apparaîtront mieux à la lecture de la description qui suit des exemples de réalisation de mélanges de l'invention donnés bien entendu à titre illustratif et non limitatif.

La figure unique annexée représente en coupe verticale un dispositif d'affichage à cristal liquide utilisant les mélanges de l'invention.

Cet exemple illustre la préparation d'un mélange comportant un cristal liquide constitué par le 1-(trans-4-n-éthylcyclohexyl)-2-{2'-fluoro-4'-(2-éthyl)-4-biphénylyl} éthane (I22) de formule :

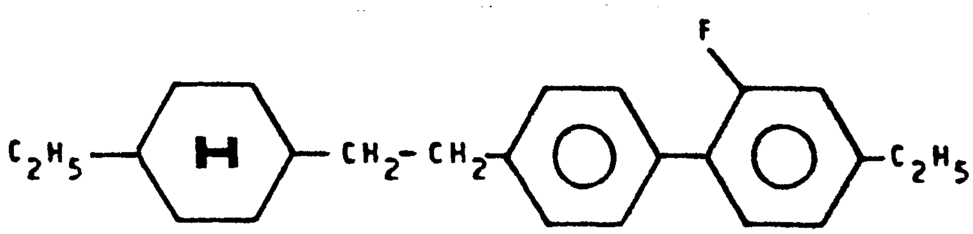

(VIII)

et un composé non mésomorphe répondant à la formule :

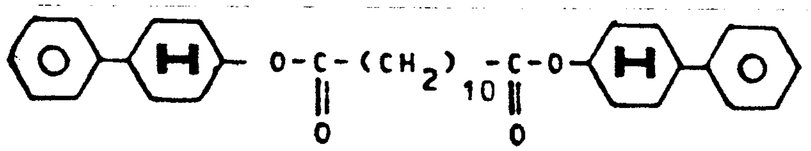

(II)

On prépare tout d'abord le composé non mésomorphe de formule (II) à partir du phénylcyclohexanol qui est formé par réduction de la phénylcyclohexanone par l'hydrure de lithium et d'aluminium en présence d'éther. On fait réagir ensuite le phénylcyclohexanol avec le diacide de formule :

$HOOC(CH_2)_{10}$-COOH
en dissolvant dans du dichloroéthane une mole du diacide. du N, N-dicyclohexylcarbodiimide et de la 4-pyrrolidino pyrridine, puis on ajoute cette solution à 2 moles de phénylcyclohexanol. On obtient ainsi le diester de formule (II) :

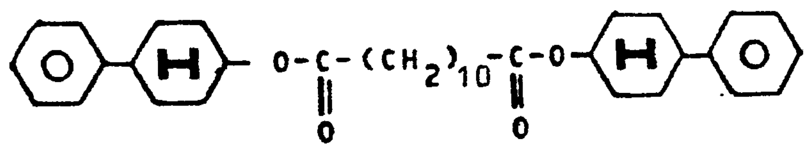

(II)

dénommé ci-après CVO 35. Ce produit a un point de fusion de 96°C.

Les températures de fusion d'autres composés non mésomorphes de formule (I) sont présentées dans le tableau 1 ci-après.

Tableau 1

Températures de fusion solide (K)→isotrope (I)

| n | $R_1$ = $R_2$ | K→I (°C) |
|---|---|---|
| 10 | H | 96 |
| | $C_5H_{11}$ | 98 |
| | $C_6H_{13}$ | 102,9 |
| | $C_7H_{15}$ | 101,6 |
| 14 | $C_5H_{11}$ | 115,1 |
| | $C_6H_{13}$ | 107,6 |
| | $C_7H_{15}$ | 105,8 |
| | $C_9H_{19}$ | 107,2 |

On prépare ensuite un mélange de ce composé avec le cristal liquide I22 de formule (VIII) afin d'obtenir un mélange contenant 4,91 % en poids de composé non mésomorphe CV035. On mesure ensuite le rapport $K_{33}/K_{11}$ du mélange obtenu par une méthode classique. Ce rapport est de 1,72 mesuré à 25° C alors que la même mesure effectuée sur le cristal liquide I22 seul donne un rapport $K_{33}/K_{11}$ de 1,2.

On prépare de la même façon un mélange contenant le cristal liquide I22 de formule VIII et le composé non mésomorphe (4,9 % en poids) de formule I dans laquelle n = 10 et $R_1 = R_2 = C_5H_{11}$. Dans ce cas, la valeur du rapport $K_{33}/K_{11}$ mesurée à 25° C est égale à 1,6.

Ainsi, l'addition du composé non mésomorphe de l'invention permet d'augmenter de façon importante le rapport $K_{33}/K_{11}$.

Les mélanges de l'invention peuvent être utilisés comme cristal liquide dans le dispositif d'affichage représenté en coupe verticale sur la figure annexée.

Sur cette figure, on voit que le dispositif d'affichage comprend deux parois isolantes et transparentes 1 et 3 et des joints d'étanchéité 5 et 7 délimitant une cavité interne 8 remplie de cristal liquide. Les deux parois isolantes sont revêtues intérieurement d'un système d'électrodes à bandes croisées 9 et 11 permettant de déterminer les zones d'affichage. Un système de polariseurs croisés 13 et 15 est disposé de part et d'autre des parois 1 et 3 et un système de commande 17 permet d'appliquer une tension électrique sur les électrodes voulues. En fonctionnement, on applique à certaines des électrodes les tensions voulues pour déformer le cristal liquide dans les zones correspondant à ces électrodes et obtenir ainsi l'affichage.

Ce dispositif de commande des électrodes peut être du type de celui décrit dans le brevet européen EP-A-0055966 du Commissariat à l'Energie Atomique.

Dans ce dispositif, on peut utiliser comme cristal liquide les mélanges de l'invention.

**Revendications**

1. Mélange ayant les propriétés d'un cristal liquide nématique, caractérisé en ce qu'il comprend:
- au moins un cristal liquide nématique, et
- au moins un composé non mésomorphe capable d'améliorer le comportement élastique du cristal liquide nématique en augmentant la valeur du rapport $K_{33}K_{11}$ dans lequel $K_{33}$ représente la constante élastique de flexion et $K_{11}$ représente la constante élastique d'éventail du cristal liquide.

2. Mélange selon la revendication 1, caractérisé en ce qu'il comprend de 0,5 à 10 % en poids du composé non mesomorphe.

3. Mélange selon l'une quelconque des revendications 1 et 2, caractérisé en ce que le composé non mésomorphe répond à la formule :

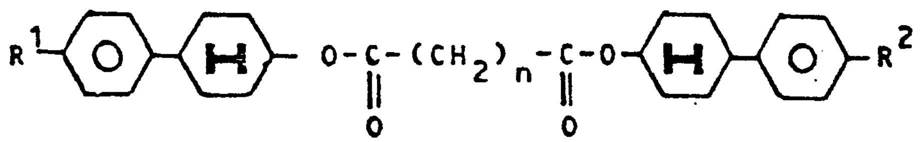 (I)

dans laquelle $R^1$ et $R^2$ qui peuvent être identiques ou différents représentent un atome d'hydrogène ou un radical alkyle ayant de 1 à 12 atomes de carbone et n est un nombre entier allant de 2 à 16.

4. Mélange selon la revendication 3, caractérisé en ce que le composé non mésomorphe répond à la formule :

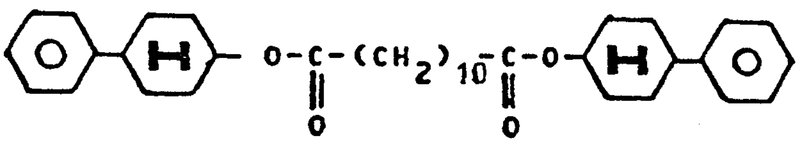 (II)

5. Mélange selon l'une quelconque des revendications 1 à 4, caractérisé en ce qu'il comprend au moins un cristal liquide constitué par un 1-(alkylcyclo hexyl-2-(alkylfluorobiphénylyl) éthane de formule :

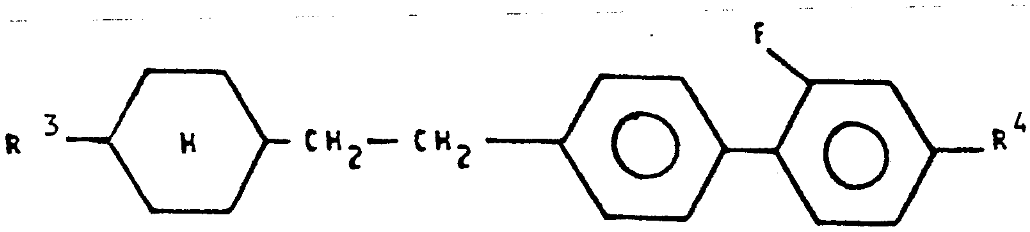 (III)

dans laquelle $R^3$ et $R^4$ qui peuvent être identiques ou différents, sont des radicaux alkyle de 1 à 7 atomes de carbone.

6. Mélange selon la revendication 4, caractérisé en ce que le cristal liquide nematique est le 1-(trans 4-n-éthylcyclohexyl)-2-[2'-fluoro-4'-(2-ethyl)-4-biphénylyl] éthane (I22) de formule :

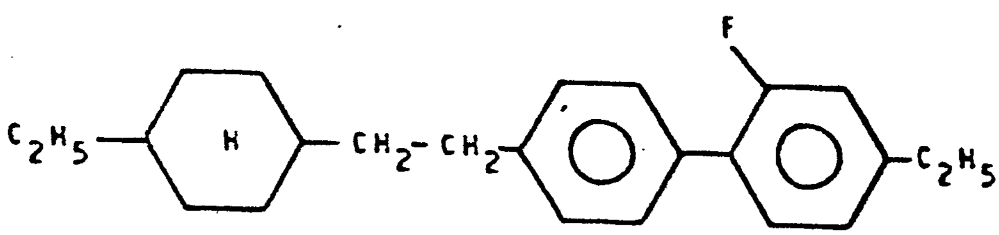 (VIII)

7. Mélange selon l'une quelconque des revendications 1 à 4, caractérisé en ce qu'il comprend un mélange de cristaux liquides constitués par :
- au moins un 1-(alkylcyclohexyl-2-(alkylfluorobiphénylyl)-éthane de formule :

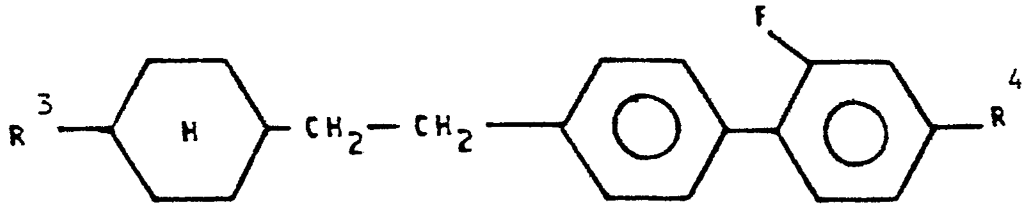

(III)

dans laquelle $R^3$ et $R^4$ qui peuvent être identiques ou différents, sont des radicaux alkyle de 1 à 7 atomes de carbone, et

- au moins un composé choisi parmi :

a) les alkyl bicyclooctane carboxylates d'alkyl fluorophényle de formule :

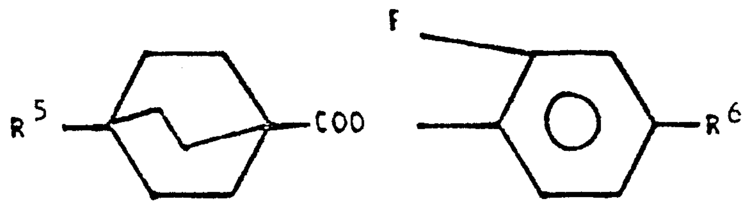

(IV)

dans laquelle $R^5$ et $R^6$ qui peuvent être identiques ou différents, sont des radicaux alkyle de 1 à 7 atomes de carbone,

b) les biphénylbicyclohexyldialkyle de formule :

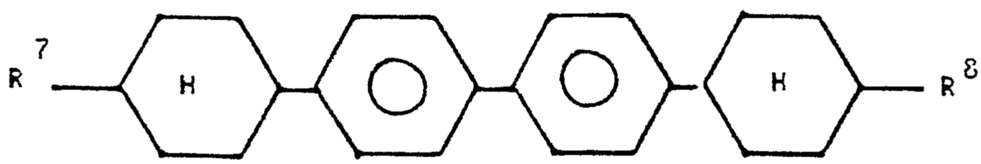

(V)

dans laquelle $R^7$ et $R^8$ sont des radicaux alkyle de 1 à 7 atomes de carbone.

c) les alkylcyclohexylcarboxylates de dicyanoalcoxyphényle répondant à la formule :

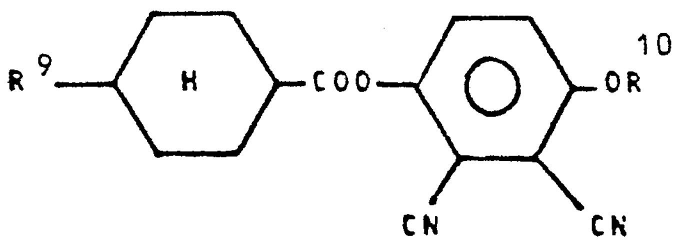

(VI)

dans laquelle $R^9$ et $R^{10}$ qui peuvent être identiques ou différents, sont des radicaux alkyle de 1 à 7 atomes de carbone, et

d) les bicyclohexylcarbonitriledialkyle ou alkylalkylène répondant à la formule :

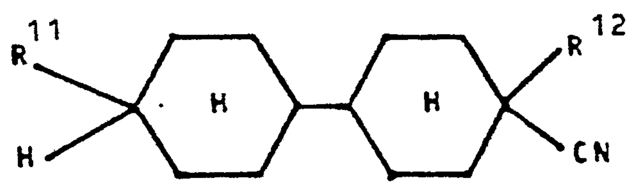

(VII)

dans laquelle $R^{11}$ et $R^{12}$ qui peuvent être identiques ou différents, sont des radicaux alkyle ou alkylène de 1 à 7 atomes de carbone ;

ledit mélange comprenant :

- de 60 à 90 % en poids au total du ou des 1-(alkylcyclohexyl)-2-(alkylfluorobiphénylyl) éthane,
- de 0 à 15 % au total du ou des alkylbicyclooctane carboxylates d'alkylfluorophényle,
- de 0 à 12 % au total du ou des biphénylbicyclohexyldialkyle.
- de 0 à 12 % au total du ou des alkylcyclohexylcarboxylates de dicyanoalcoxyphényle, et
- de 0 à 40 % au total du ou des bicyclohexylcarbonitrile dialkyle ou alkylalkylène.

8. Dispositif d'affichage à cristaux liquides utilisant l'effet de biréfringence contrôlé électriquement, caractérisé en ce que l'écran de ce dispositif comprend un mélange selon l'une quelconque des

revendications 1 à 7.

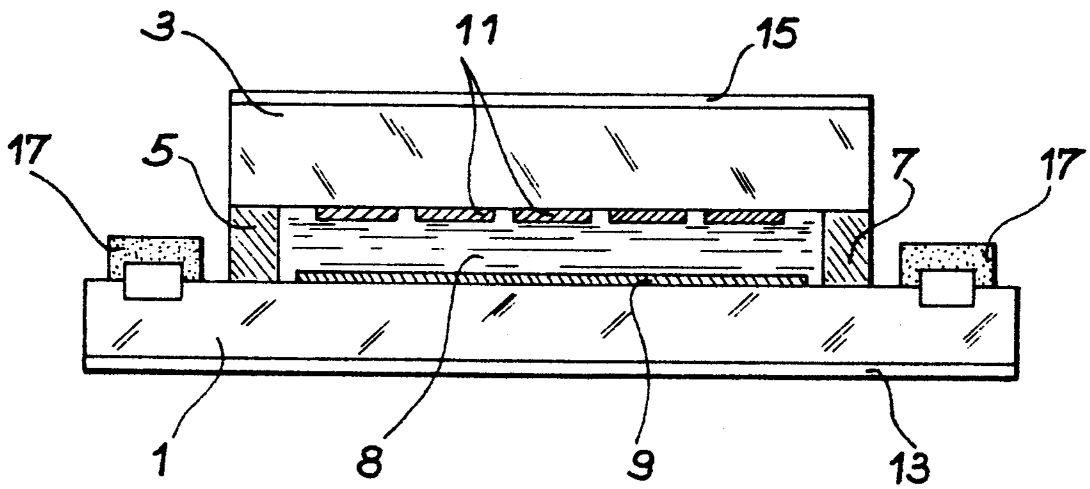
3
11
15
17
5
7
17
1
8
9
13

Office européen des brevets

**RAPPORT DE RECHERCHE EUROPEENNE**

Numero de la demande

EP 86 40 2119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | GB-A-2 094 311 (V.M. SHOSHIN) * Page 7, lignes 9-24 * --- | 1 | C 09 K 19/54<br>C 09 K 19/30<br>C 09 K 19/42 |
| A | GB-A-2 134 110 (SECRETARY OF STATE FOR DEFENCE) * Page 1, lignes 1-31; exemples; revendications 1-12 * --- | 1,7 | |
| A | EP-A-0 072 204 (SECRETARY OF STATE FOR DEFENCE) * Page 1, lignes 12-25; page 2, lignes 1-5; page 3, lignes 1-25; page 5, lignes 4-14; page 7, lignes 1-16; page 8, lignes 4-9; page 11, lignes 1-12; page 12, lignes 3-16; page 28, tableau 9; revendications 1-10 * --- | 1,5-7 | |
| | | | **DOMAINES TECHNIQUES RECHERCHES (Int. Cl.4)** |
| A | EP-A-0 117 631 (SECRETARY OF STATE FOR DEFENCE) * Page 1, lignes 13-24; page 2, lignes 1-19; page 3, lignes 8-30; page 5, lignes 3-8; page 10, lignes 6-17; page 59, tableau 16; revendications 1-12 * ----- | 1,5-7 | C 09 K |

Le présent rapport de recherche a été établi pour toutes les revendications

| Lieu de la recherche | Date d achèvement de la recherche | Examinateur |
|---|---|---|
| LA HAYE | 15-12-1986 | BOULON A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l invention
E : document de brevet antérieur, mais publié à la date de dépôt ou après cette date
D : cité dans la demande
L : cité pour d autres raisons

& : membre de la même famille, document correspondant

OEB Form 1503 03 82